# EUROPEAN PATENT APPLICATION

(11) **EP 4 761 303 A1**
(43) Date of publication of application: **17.06.2026**
(21) Application number: 24915905.4
(22) Date of filing: 08.01.2024
(51) Int. Cl.: H04W 4/44, B60C 23/04

(54) **MANAGEMENT METHOD, APPARATUS AND SYSTEM FOR SENSOR-RELATED DATA**

(71) Applicant: Hamaton Automotive Technology Co., Ltd., Linping District Hangzhou, Zhejiang 311100 (CN)
(72) Inventor: ZHANG, Jianer, Hangzhou, Zhejiang 311100 (CN); YU, Mingguang, Hangzhou, Zhejiang 311100 (CN); DING, Haijun, Hangzhou, Zhejiang 311100 (CN); XIE, Xueling, Hangzhou, Zhejiang 311100 (CN); HUA, Liping, Hangzhou, Zhejiang 311100 (CN); LV, Chengqi, Hangzhou, Zhejiang 311100 (CN); LAN, Enjin, Hangzhou, Zhejiang 311100 (CN); TAN, Junjie, Hangzhou, Zhejiang 311100 (CN); GE, Pengfei, Hangzhou, Zhejiang 311100 (CN)
(74) Representative: 2SPL Patentanwälte PartG mbB
(86) International application number: PCT/CN2024/071191
(87) International publication number: WO 2025/147823

(57) **Abstract**

A method, a system and an apparatus for managing sensor-related data, an electronic device, and a storage medium are provided. The method is applied to a management server, and includes: for any tire pressure sensor, acquiring circulation-related data of the tire pressure sensor, where the circulation-related data is configured to record a circulation process of the sensor among all ownership entities from completion of production to activation; receiving activation-related data generated by an activation event and uploaded by an activation client, the activation event is configured to activate the sensor installed on a target tire of a target vehicle, and after the activation, the sensor is configured to submit collected tire state data to the target vehicle; and maintaining sensor-related data of the sensor by using a sensor identifier as an index, where the sensor-related data includes the circulation-related data and the activation-related data.

## Description

### TECHNICAL FIELD

This disclosure relates to the field of big data, and in particular, to a method, an apparatus and a system for managing sensor-related data.

### BACKGROUND

TPMS (Tire Pressure Monitor System) is fully known as a tire pressure monitoring system, and the function of TPMS is to automatically monitor the tire pressure in real time during driving a vehicle, and alarm the tire leakage and low pressure to ensure the driving safety. The TPMS mainly includes a tire pressure sensor (or referred to as a tyre pressure sensor or a TPMS sensor), a microcontroller unit (MCU), a radio frequency module, and an antenna.

At present, the tire pressure sensor is usually a wireless sensor, that is, after collecting relevant signals of parameters such as tire pressure, the tire pressure sensor encodes and modulates the relevant signals into radio frequency signals and transmits the radio frequency signals through the antenna, so that a receiving device of the vehicle system receives the radio frequency signals and decodes the radio frequency signals to learn values of the parameters collected by the tire pressure sensor. After the tire or the tire pressure sensor installed thereon is replaced, a newly installed tire pressure sensor needs to be activated so that the newly mounted tire pressure sensor can smoothly communicate with the vehicle system.

In the related art, a user may acquire a new tire pressure sensor through various circulation channels (for example, purchase through a sales channel), and then install the new tire pressure sensor on a tire of a vehicle and activate the new tire pressure sensor to ensure normal operation. Each stage of the above process is independent of each other and requires a high participation of related personnel, and the data in each stage is split from each other and the management method is coarser, which is not only not conducive to the efficient management and utilization of related data, but also has certain data security risks.

### SUMMARY

This disclosure provides a method and an apparatus for managing sensor-related data, an electronic device, and a storage medium, to at least resolve the technical problems in the related art. Technical solutions of this disclosure are as follows:

According to a first aspect of the embodiments of this disclosure, a method for managing sensor-related data is provided, applied to a management server and including:
for any tire pressure sensor, acquiring circulation-related data of the tire pressure sensor, where the circulation-related data is configured to record a circulation process of the tire pressure sensor among all ownership entities from completion of production to activation;
receiving activation-related data of the tire pressure sensor uploaded by an activation client, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
maintaining sensor-related data of the tire pressure sensor by using at least a sensor identifier of the tire pressure sensor as an index, where the sensor-related data includes the circulation-related data and the activation-related data.

According to a second aspect of the embodiments of this disclosure, a system for managing sensor-related data is provided, where the system includes a management server, the management server is configured to:
for any tire pressure sensor, acquire circulation-related data of the tire pressure sensor, where the circulation-related data is configured to record a circulation process of the tire pressure sensor among all ownership entities from completion of production to activation;
receive activation-related data of the tire pressure sensor uploaded by an activation client, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
maintain sensor-related data of the tire pressure sensor by using at least a sensor identifier of the tire pressure sensor as an index, where the sensor-related data includes the circulation-related data and the activation-related data.

According to a third aspect of the embodiments of this disclosure, an apparatus for managing sensor-related data is provided, applied to a management server and including:
a data acquiring unit, configured to, for any tire pressure sensor, acquire circulation-related data of the tire pressure sensor, where the circulation-related data is configured to record a circulation process of the tire pressure sensor among all ownership entities from completion of production to activation;
a data receiving unit, configured to receive activation-related data of the tire pressure sensor uploaded by an activation client, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
a date maintaining unit, configured to maintain sensor-related data of the tire pressure sensor by using at least a sensor identifier of the tire pressure sensor as an index, where the sensor-related data includes the circulation-related data and the activation-related data.

According to a fourth aspect of the embodiments of this disclosure, an electronic device is provided, including:
one or more processors; a memory, configured to store instructions executable by the one or more processors;
where the one or more processors are configured to execute the instructions to implement the method for managing sensor-related data according to any embodiment of the first aspect.

According to a fifth aspect of the embodiments of this disclosure, a storage medium is provided, where when instructions in the storage medium are executed by one or more processors of a management server, the management server is enabled to perform the method for managing sensor-related data according to any embodiment of the first aspect.

The technical solutions provided in the embodiments of this disclosure bring at least the following beneficial effects.

It can be learned from the foregoing embodiment that, in this solution, for any tire pressure sensor, the management server acquires, on one hand, the circulation-related data of the tire pressure sensor generated in a circulation process, and receives, on the other hand, activation-related data of the sensor generated in an activation process and uploaded by an activation client, and further uses the circulation-related data and the activation-related data as sensor-related data of the sensor and maintains the sensor-related data by using the sensor identifier as an index. In this way, the management server can uniformly maintain all data of the tire pressure sensor involved in each process from the completion of production to the completion of activation (which has also been installed at this time and can work normally), which realizes the efficient management of the whole process of relevant data involved in the whole life cycle of the sensor (from the production to use), helps to track the whole life cycle of the sensor, and avoids potential safety hazards such as data loss and confusion to a certain extent through the unified refined management.

It is to be understood that both the foregoing general description and the following detailed description are exemplary and explanatory only and are not restrictive of the disclosure.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure and do not constitute an undue limitation on the present disclosure.
FIG. 1 is a schematic diagram of a system for managing sensor-related data according to an embodiment of the present disclosure.
FIG. 2 is a schematic diagram of a circulation network of a tire pressure sensor according to an embodiment of the present disclosure.
FIG. 3 is a flowchart of a method for managing sensor-related data according to an embodiment of the present disclosure.
FIG. 4 is a structural diagram of an electronic device according to an embodiment of the present disclosure.
FIG. 5 is a schematic block diagram of an apparatus for managing sensor-related data according to an embodiment of the present disclosure.

### DETAILED DESCRIPTION

To enable a person of ordinary skill in the art to better understand the technical solutions of this disclosure, the following clearly and completely describes the technical solutions in the embodiments of this disclosure with reference to the accompanying drawings.

It should be noted that the terms "first", "second", and the like in the specification, claims, and accompanying drawings of this disclosure are intended to distinguish similar objects, but do not necessarily indicate a specific order or sequence. It should be understood that the data used in this way is interchangeable in proper circumstances, so that the embodiments of this disclosure described herein can be implemented in a sequence other than those shown or described herein. The implementations described in the following exemplary embodiments do not represent all implementations consistent with the present disclosure. Rather, they are merely examples of apparatuses and methods consistent with some aspects of the present disclosure as detailed in the appended claims.

To resolve the foregoing technical problem in the related art, this disclosure provides a system for managing sensor-related data, and a method for managing sensor-related data implemented by a management server in the system. The following provides detailed descriptions with reference to the accompanying drawings.

The present disclosure provides a system for managing sensor-related data (hereinafter referred to as a management system), where the system includes a management server, and the management server is configured to:
for any tire pressure sensor, acquire circulation-related data of the tire pressure sensor, where the circulation-related data is configured to record a circulation process of the tire pressure sensor among all ownership entities from completion of production to activation;
receive activation-related data of the tire pressure sensor uploaded by an activation client, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
maintain sensor-related data of the tire pressure sensor by using at least a sensor identifier of the tire pressure sensor as an index, where the sensor-related data includes the circulation-related data and the activation-related data.

This solution only relates to the management of related data of the "tire pressure sensor", and does not relate to other types of sensors. Therefore, for brevity, the "tire pressure sensor" is simply referred to as "sensor" in the following description, and the "any tire pressure sensor" is simply referred to as "any sensor" or "the sensor".

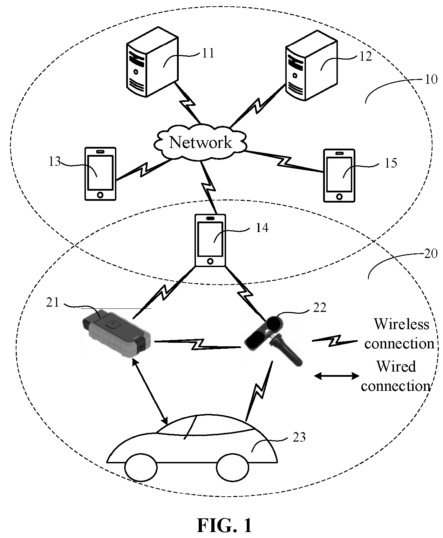

As shown in FIG. 1, the management system 10 includes a management server-side running in a management server 11 (hereinafter, abbreviated as management server). In addition, the management system 10 may further include an activation client running in a mobile phone 14. The following uses an example in which the management system 10 includes both the management server and the activation client. The management server in the management system 10 may be integrated with circulation function of the tire pressure sensor; or the management system 10 may also include a circulation server (integrated with the circulation function of the tire pressure sensor) running in the circulation server 12 (hereinafter, abbreviated as circulation server). The circulation server is configured to cooperate with a terminal in the system to circulate the tire pressure sensor among all ownership entities. The circulation function of the tire pressure sensor may specifically include sales (involving ownership transfer activities of funds), stock transfer (ownership transfer activities not involving funds), warehousing, logistics, etc., which will not be repeated. Each tire pressure sensor produced by a sensor manufacturer can circulate to a user through a circulation network, so that the user can install the tire pressure sensor on a tire of a vehicle (for example, on a replaced new tire, or used to replace a faulty sensor on an old tire). The user may be a clerk of a vehicle repair shop or an individual user (such as a vehicle owner).

In a circulation process of each tire pressure sensor, the tire pressure sensor circulates to an entity such as a natural person, organization, or mechanism (for example, the entity purchases the sensor), the entity acquires ownership of the sensor and becomes the corresponding ownership entity of the sensor (that is, the entity that owns the ownership of the sensor). It can be learned that a complete circulation of a tire pressure sensor from the manufacturer to the user may pass through multiple ownership entities, for example, a manufacturer, an agent (or referred to as a dealership), an independent chain store, a maintenance store (for example, a self-employed maintenance store, a mobile maintenance store, or a 4S store that provides a vehicle maintenance service), and an individual user. The agent may include a plurality of levels, for example, a national agent sells sensors to a next-level provincial agent, and the provincial agent sells sensors to a next-level city agent. The independent chain store may be an entity store or an online store, and the online store may be established based on a general e-commerce platform, or may be established based on the management server and the circulation network.

All ownership entities that may be involved in the circulation process of the tire pressure sensor may complete registration in advance at the management server. For example, a management client may run on a mobile phone 13 used by an operator of an agent, and an entity identity (that is, an account, the same below) of the agent may be registered at the management server by using the management client. For another example, the management client may run on a mobile phone 15 used by an operator of a maintenance store, and an entity identity of the maintenance store may be registered at the management server through the management client. For another example, the management client may also run on a mobile phone 14 used by an individual user, and an entity identity of the user may be registered at the management server through the management client. In addition, related personnel (managers, ordinary staff, etc.) of the ownership entities of the institution type such as the agent, the independent chain store, and the maintenance store can all register their own personal identity and bind them with the entity identity of the ownership entity where they are located, so that the personnel identity belongs to the institution identity.

In an embodiment, all ownership entities registered at the management server may form a circulation network including a plurality of levels, an upper level of any two adjacent levels in the circulation network includes at least one upper-level entity, and a lower level of the any two adjacent levels includes at least one lower-level entity. Where a sensor belonging to any lower-level entity circulates from the at least one upper-level entity and/or at least one other lower-level entity to the lower-level entity (for example, sold to the lower-level entity). Each of the ownership entities has management authority on the sensor-related data of each tire pressure sensor that circulates to the ownership entity or from the ownership entity to other ownership entities.

The circulation network may include a sales network of sensors, and in this case, each participant in the management system may realize sensor sales based on the sales network, that is, circulating sensors among multi-level sellers and buyers. For example, each manufacturer has management authority on the sensor-related data of all sensors, which are produced and sold by the manufacturer itself, generated in the whole life cycle. Each agent has management authority on the sensor-related data of all sensors (including sold and/or unsold sensors) purchased by the agent itself. And each individual user has management authority on the sensor-related data of all tire pressure sensors (including activated and/or inactivated tire pressure sensors) purchased by the individual user itself. It may be understood that, in the foregoing circulation network including a plurality of levels, because each ownership entity at each level has the management authority on the sensor-related data of sensors purchased or sold by the ownership entity, the ownership entity may implement full-flow tracking on the sensors. In addition, due to existence of the circulation network with the plurality of levels, the upper-level entity can accurately track all sensors corresponding to the lower-level entity.

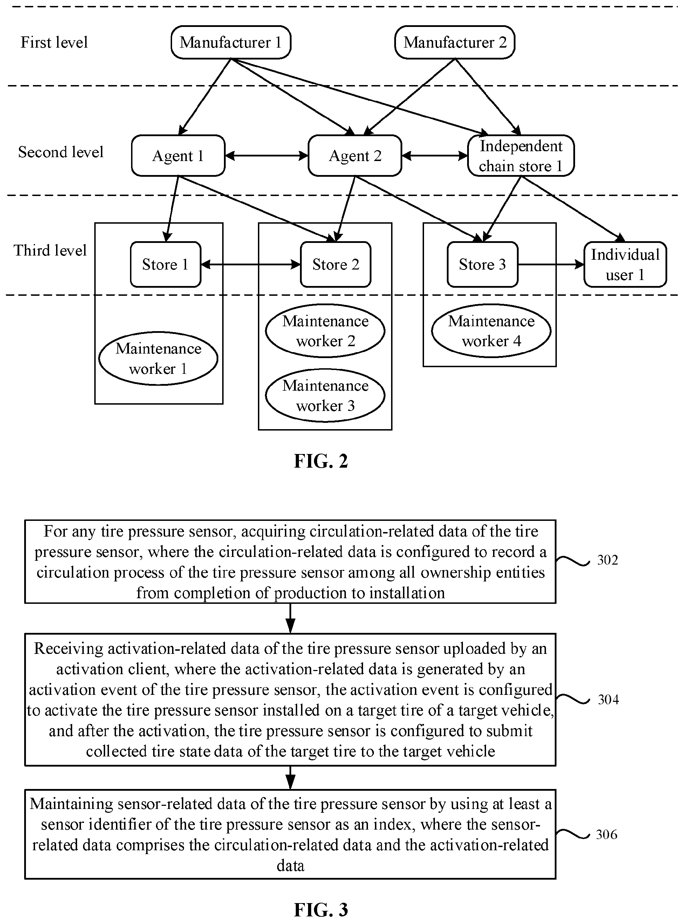

As shown in FIG. 2, which is a circulation network including three levels, where ownership entities include manufacturers (i.e., a manufacturer 1 and a manufacturer 2) at a first level, agents (i.e., an agent 1 and an agent 2) and independent chain stores (i.e., an independent chain store 1) at a second level, maintenance stores (i.e., a store 1, a store 2, and a store 3) and individual users (i.e., an individual user 1) at a third level. The manufacturer 1 and the manufacturer 2 may belong to the same brand party (i.e., producing sensors of the same brand) or different brand parties (i.e., producing sensors of different brands), of course, any manufacturer may produce sensors of only one brand, or may produce sensors of multiple brands (e.g., a foundry mode), which is not limited in the embodiments of the present disclosure. In addition, FIG. 2 also shows maintenance personnel in the maintenance store (i.e., maintenance worker 1 in store 1, maintenance workers 2 and 3 in store 2, maintenance worker 4 in store 3, etc.). As described above, all ownership entities and related personnel may complete identity registration at the management server in advance. In FIG. 2, an arrow direction indicates a circulation direction of the sensor, that is, an arrow pointing from any ownership entity A to another ownership entity B is used to indicate that at least one tire pressure sensor circulates from A to B. The circulation process of the sensors may include a sales process, for example, the agent 1 sells a batch of sensors to the store 1, and the independent chain store 1 sells a batch of sensors to the store 3, and so on. The circulation process may also include a non-sales circulation process, for example, in the case where both the agents 1 and 2 are authorized to sell sensors of the same brand, if the current inventory of the agent 1 is insufficient, a batch of sensors of the brand may be temporarily circulated from the agent 2, and this circulation process may be completed by the brand party of the brand through negotiation, or may be completed by the agents 1 and 2 themselves, and the circulation process may not involve fund transfer (that is, the agent 2 may not pay goods to the agent 1, etc.). Of course, the specific logic of the above sales and circulation may be reasonably set according to the actual situation, which is not limited in the present disclosure.

In an embodiment, ownership entities to which any tire pressure sensor belongs in sequence from completion of production to activation may include a manufacturer, an agent, and a maintenance store, for example, the manufacturer 1 sells at least one sensor to the agent 1 (that is, the agent 1 purchases at least one sensor from the manufacturer 1, the same below), and the agent 1 sells at least one of the sensors to the store 1. In an embodiment, the ownership entities may also include a manufacturer, an independent chain store, and a maintenance store, for example, the manufacturer 1 sells at least one sensor to the independent chain store 1, and the independent chain store 1 sells at least one of the sensors to the store 3. In an embodiment, the ownership entities may further include a manufacturer, an independent chain store, and an individual user, for example, the manufacturer 1 sells at least one sensor to the independent chain store 1, and the independent chain store 1 sells at least one of the sensors to the individual user 1. Of course, among the ownership entities to which the above any sensor sequentially belongs from the completion of production to the activation, there may be a plurality of ownership entities at the same level, for example, the agent 1 and the agent 2 respectively circulate sensors to each other, the agent 2 and the independent chain store 1 respectively circulate sensors to each other, the store 1 and the store 2 respectively circulate sensors to each other, etc.

It should be noted that any tire pressure sensor described in the present disclosure is "produced", indicating that the production stage and the testing stage before delivery of the sensor have been completed, and thereafter, the sensor may be circulated (such as stored, sold, transported, etc.), installed and activated; "before activation" of any tire pressure sensor, indicates that the sensor has been circulated to its user (that is, the sensor has been owned by its user), and thereafter, the user may activate the sensor (at this time, the sensor may not have been installed or has been installed).

The operations involved in the above circulation process may be completed by relevant personnel through the management client. For example, a purchaser of the agent 1 may initiate a sensor purchase request to the management server by using the management client running on the mobile phone 13 based on a purchase requirement, and (the management server may consider the request as a request initiated by the agent 1) in response to the request, the management server may generate a sales order and issue the sales order to a corresponding ownership entity (for example, the manufacturer 1 or the agent 2), so that the corresponding ownership entity sells corresponding sensors to the agent 1 based on the order. In an embodiment, a purchaser of the store 1 may initiate a sensor purchase request to the management server through the management client running on the mobile phone 15 according to a purchase requirement, and (the management server may regard the request as a request initiated by the store 1) the management server may generate a sales order in response to the request and issue the sales order to a corresponding ownership entity (such as the agent 1), so that the latter sells a corresponding sensor to the store 1 according to the order. In an embodiment, the individual user 1 may initiate a sensor purchase request to the management server through a management client running on the mobile phone 14 based on a purchase requirement, and in response to the request, the management server may generate a sales order and issue the sales order to a corresponding ownership entity (such as the independent chain store 1 or the store 3), so that the corresponding ownership entity can sell corresponding tire pressure sensors to the individual user 1 according to the order.

Corresponding circulation-related data may be generated in a process of circulating the tire pressure sensor based on the circulation network. For example, the circulation-related data of each tire pressure sensor may include at least one of: factory information of the tire pressure sensor, a sales order of the tire pressure sensor (including information such as purchase time, model, quantity, price, and total amount), logistics information of the tire pressure sensor (including information such as a shipping place, a receiving place, and a logistics schedule), payment information of the tire pressure sensor (account information of a payer and a payee, transfer time, and the like), identity information of the ownership entities, and the like. Of course, specific content of the circulation-related data may also be set according to an actual situation, which is not limited in embodiments of this disclosure. It can be understood that each sensor circulating through the circulation network can generate the above circulation-related data. The circulation-related data of each sensor may be maintained by the management server and/or the circulation server, and each maintenance party may store the circulation-related data maintained by the maintenance party in a persistent storage space such as a local disk of the maintenance party or an external database associated with the maintenance party. Correspondingly, the management server may subsequently acquire the circulation-related data of the any sensor from the circulation-related data maintained by the management server or the circulation server.

In addition, the management system 10 may be maintained by the manufacturer of the sensor to manage the sensor-related data generated in the whole life cycle of the sensor produced and sold by the manufacturer. In an embodiment, the management system 10 may also be maintained by the brand party of the sensor to manage the sensor-related data generated in the whole life cycle of the sensors of the brand, produced and sold by the manufacturer delegated by the brand party.

In the foregoing manner, the maintenance store and the individual user can purchase a required tire pressure sensor, so that a related person (for example, the maintenance worker 1 or the individual user 1) can perform programming, learning, and matching processing on the tire pressure sensor by operating an activation client, to complete an activation process of the sensor. The activation event is completed by cooperation of an activation terminal, an electronic device in which the activation client is located, the target vehicle, and the any tire pressure sensor. As shown in FIG. 1, a related person may operate the activation client running on the mobile phone 14, so that the mobile phone 14 cooperates with an activation terminal 21, a tire pressure sensor 22 (that is, the any sensor previously purchased by a maintenance store or an individual user), and a target vehicle 23 to complete an activation process of the sensor (that is, cooperate with each other to complete an activation event of the sensor). After the sensor is installed on the target tire of the target vehicle 23 and activated, the sensor may start to work normally, that is, the tire state data of the target tire collected by the sensor may be submitted to the target vehicle 23 through wireless communication. The mobile phone 14, the activation terminal 21, the tire pressure sensor 22, and the target vehicle 23 jointly constitute an activation system 20 for the tire pressure sensor 22.

It should be noted that the management client and the activation client described in this disclosure may be actually a same client, that is, a data management function and a sensor activation function may be integrated in the client; and further, a sensor circulation function may also be integrated in the client, so that a user can purchase or sell the sensor.

In the activation system 20, the tire pressure sensor 22 may communicate with the target vehicle 23 by sending a wireless radio frequency signal, so as to send status-related data of the target tire to the target vehicle. In addition, the mobile phone 14 may establish a first wireless connection (for example, an NFC connection or a Bluetooth connection) to the tire pressure sensor 22, the mobile phone 14 may establish a second wireless connection (for example, a Bluetooth connection or a Wifi connection) to the activation terminal 21, and the activation terminal 21 may establish a third wireless connection (for example, an NFC connection or a wireless radio frequency connection) to the tire pressure sensor 22. The target vehicle 23 is equipped with a communication antenna to implement the wireless connection with the tire pressure sensor. It can be learned that any two of the mobile phone 14, the activation terminal 21, and the tire pressure sensor 22 in the system may interact through a wireless connection, and the wireless connection established between the any two parties is actually an end-to-end connection between the two parties. Because the devices in the activation system can interact with each other based on the foregoing wireless connection, the system can implement an expected function of matching the tire pressure sensor without a special connection line, thereby simplifying a system structure and helping reduce costs. In addition, the activation terminal 21 may establish a wired connection to the target vehicle 23 through an On-Board Diagnostics (OBD) interface.

When the NFC connection or the wireless radio frequency connection is established between the activation terminal 21 (or the mobile phone 14) and the tire pressure sensor 22, the NFC connection or the wireless radio frequency connection may implement millisecond level device connection (or pairing) by using a wireless wake-up signal. The device that is woken up (that is, the tire pressure sensor 22) is essentially equivalent to a passive component. In this connection process, a user does not need to manually implement "pairing" and "connection confirmation" operations similar to Bluetooth or Wifi technology, which helps implement quick connection and information interaction between devices. However, it should be noted that although the establishment process of the NFC connection or the radio frequency connection is extremely fast and is usually completed together with the data transmission process, the connection should still be considered as a wireless connection, that is, a wireless connection (that is, the third wireless connection) is established between the activation terminal 21 and the tire pressure sensor 22.

The following briefly describes two stages of programming and learning involved in the activation process of the tire pressure sensor 22.

Programming stage: the mobile phone 14 determines a communication parameter of the target vehicle 23, where the communication parameter may include a connection parameter and a submission configuration parameter. In addition, the activation client (through the first wireless connection) writes the communication parameter into the tire pressure sensor 22, or the activation client (through the second wireless connection) instructs the activation terminal 21(through the third wireless connection) to write the communication parameter into the tire pressure sensor 22. The process of writing the communication parameter to the tire pressure sensor 22 is the process of programming the sensor. The programmed tire pressure sensor 22 may be installed on the target tire of the target vehicle 23 (which may be any tire of the vehicle); further, the above programming may also be performed after the installation is completed, which is not limited in the present disclosure.

Learning stage: the mobile phone 14 reads the sensor identifier of the tire pressure sensor 22 and sends the sensor identifier to the activation terminal 21, or the activation terminal 21 reads the sensor identifier of the tire pressure sensor 22 by itself. Then, after establishing a connection to the target vehicle 23 through the OBD interface, the activation terminal 21 sends the sensor identifier to the target vehicle 23 under an instruction of the mobile phone 14. The user may further specify a target position of the target tire in the target vehicle 23 in the mobile phone 14. And the activation terminal 21 sends corresponding position information to the target vehicle 23. In this manner, the target vehicle 23 may learn the sensor identifier (or still the location information) of the tire pressure sensor 22.

After the above programming and learning stages are completed, the activation process of the tire pressure sensor 22 ends (such as completing the maintenance of the target vehicle 23). Thereafter, the tire pressure sensor 22 can cooperate with the target vehicle 23 to start normal operation, that is, for the tire state data collected by tire pressure sensor, the sensor can send the status-related data including the target sensor identifier and the tire state data to the target vehicle 23 according to the target communication parameter written locally, so that the target vehicle can receive and identify. The activation-related data of each tire pressure sensor may include at least one of: an activation time, a communication parameter (that is, the connection parameter) written into the tire pressure sensor during activation, identity information of an activation operation user (such as the maintenance worker 1 or the individual user 1), feature information of the target vehicle, and vehicle owner information of the target vehicle.

It should be noted that any one of the management server and the circulation server in the management system 10 may be a physical server including an independent host, or may be a virtual server or a cloud server carried by a host cluster, which is not limited in the embodiments of this disclosure. The mobile phone 13-15 is merely a type of electronic device that can be used by a related person, and actually, the user can run the management client by using any type of electronic device, and run the activation client by using any type of electronic device having a wireless connection function. For example, the electronic device used by the user may be a tablet device, a notebook computer, personal digital assistants (PDAs), a wearable device (for example, smart glasses or a smart watch), a virtual reality (VR) device, an augmented reality (AR) device, or the like, which is not limited in this embodiment of this disclosure.

In addition, any one of the foregoing management client and the activation client may be a native Application (APP), a Web application (or referred to as a Web page) implemented based on a browser, a mini program implemented based on other applications, or the like. The APP usually needs to be pre-installed and initiated to run; the Web application and the mini program may be online "clients" built by using the HTML5 technology, and the running of such client programs usually does not need a specific "installation" step, but is integrated in a browser or other applications to run as independent pages or functional components (or referred to as plug-ins). The any one of the clients may provide an operable human-machine interface for the user. Based on this, the user may perform a corresponding operation in the human-machine interface to operate the mobile phone to participate in implementing the function of circulating and/or activating the sensor. Taking the mobile phone 14 as an example, since the mobile phone can display the human-machine interface for the user to operate, the activation terminal 21 itself does not need to be equipped with a display component such as a screen, and the activation terminal 21 only needs to perform corresponding response processing under the instruction (or control) of the mobile phone 14, thereby simplifying the hardware structure and software logic of the terminal and facilitating the miniaturization of the terminal.

Corresponding to the foregoing management system, this disclosure further provides a method for managing sensor-related data, applied to the management server (in the foregoing management system). As shown in FIG. 3, the method may include the following steps 302-306.

In step 302, for any tire pressure sensor, circulation-related data of the tire pressure sensor is acquired, where the circulation-related data is configured to record a circulation process of the tire pressure sensor among all ownership entities from completion of production to activation.

Corresponding circulation-related data will be generated in the process of circulating the tire pressure sensor through the circulation network, where for any tire pressure sensor, the circulation-related data of the tire pressure sensor is used to record the circulation process of the sensor among all ownership entities from the completion of production to the activation. In other words, the circulation-related data of the tire pressure sensor is generated in the circulation process of the sensor for recording (or characterizing) the circulation process. Based on this, the management server may acquire circulation-related data of each tire pressure sensor that is circulated. For any of the sensors, the circulation-related data of the sensor may be acquired in advance before the activation-related data of the sensor is acquired (that is, the step 302 is performed firstly, then the step 304 is performed), or the circulation-related data of the sensor may be acquired after the activation-related data of the sensor is acquired (that is, the step 304 is performed firstly, then the step 302 is performed). An execution sequence of step 302 and step 304 is not limited in this embodiment of this disclosure.

In an embodiment, the circulation-related data of each tire pressure sensor being circulated may be maintained by the management server itself, and at this time, the management server may acquire the circulation-related data of the any tire pressure sensor from the circulation-related data maintained by the management server itself. In this case, the management server maintains sensor-related data, and the acquiring circulation-related data of the any tire pressure sensor may be querying the circulation-related data of the sensor from the persistent storage space, and writing the queried data into the memory space of the management server. In this case, the management server acquires the circulation-related data maintained by the management server, and an acquiring speed is high, which helps to implement efficient acquiring of this portion of data.

In an embodiment, when the circulation-related data of each tire pressure sensor that is circulated is maintained by the circulation server pre-associated with the management server, the management server may acquire the circulation-related data of the any tire pressure sensor from the circulation server. In this case, the circulation-related data is maintained by the circulation server, which helps reduce data maintenance pressure of the management server. Maintenance logic and management logic of the circulation-related data are separated, which helps improve operation efficiency of the management server and subsequent management efficiency of the circulation-related data.

The management server may acquire the circulation-related data of the any tire pressure sensor from the circulation server in a plurality of manners. For example, the management server may receive the circulation-related data of the any tire pressure sensor pushed by the circulation server (actively), for example, after generating the circulation-related data of the any tire pressure sensor, the circulation server pushes the data to the management server in real time, or periodically pushes the circulation-related data of each tire pressure sensor generated in the latest time period. The push may be implemented based on a message queue, that is, the circulation server serves as a producer of each message in the message queue, the management server serves as a consumer of the message, and each message may include the circulation-related data of at least one sensor. In this manner, the management server can asynchronously acquire the circulation-related data, which helps simplify subsequent processing logic. For another example, the management server may also request the circulation server and receive the circulation-related data of the any tire pressure sensor returned by the circulation server. This manner requests the circulation server to acquire the circulation-related data only when needed, which helps reduce the data sending workload of the circulation server.

In an embodiment, the management server may acquire the circulation-related data of the any tire pressure sensor in various ways. For example, the circulation-related data of the any tire pressure sensor may be acquired according to the sensor identifier of the tire pressure sensor. For example, the data acquisition request sent to the circulation server may only include the sensor identifier of the any tire pressure sensor, the circulation server may specifically search for the circulation-related data of the sensor according to the sensor identifier and return the circulation-related data to the management server, so that the management server may specifically acquire the circulation-related data of the sensor. For another example, the management server may also acquire circulation-related data of a plurality of tire pressure sensors in batches, and query the circulation-related data of the any tire pressure sensor from the acquired circulation-related data based on the sensor identifier. For example, the data acquisition request sent to the circulation server may include related information such as models, batches, and production dates of a plurality of sensors (including the any tire pressure sensor). The circulation server may determine the circulation-related data of each tire pressure sensor conforming to the related information and return the circulation-related data to the management server, so that the sensor may acquire the circulation-related data of each tire pressure sensor (including the any tire pressure sensor) in batches, thereby further improving the efficiency of acquiring the circulation-related data.

As described above, all ownership entities registered at the management server may form a circulation network including a plurality of levels, where an upper level of any two adjacent levels in the circulation network includes at least one upper-level entity, and a lower level of the any two adjacent levels in the circulation network includes at least one lower-level entity, where a sensor belonging to any one of the at least one lower-level entity is circulated from the at least one upper-level entity and/or at least one other lower-level entity to the lower-level entity (for example, sold to the lower-level entity). Any one of the ownership entities has management authority on the sensor-related data of a tire pressure sensor circulated to the ownership entity or from the ownership entity to other ownership entities.

In an embodiment, based on the foregoing multi-level circulation network, the management server may participate in the circulation process of sensors (that is, participate in circulating the sensors). For example, the management server may receive a sensor purchase request initiated by a first ownership entity, where the first ownership entity may be any one of a plurality of registered ownership entities, and the request may be specifically initiated by a related person of the first ownership entity through an electronic device used by the related person. As shown in FIG. 2, an employee of the agent 1 may initiate a sensor purchase request by using a mobile phone used by the employee. The management server may regard the received request as being initiated by the agent 1. Or an employee of the independent chain store 1 may initiate a sensor purchase request by using a computer used by the employee. The management server may regard the received request as being initiated by the independent chain store 1.

Further, if the management server itself is integrated with a circulation function, the management server may generate a sales order according to the sensor purchase request and issue it (that is, the sales order) to an ownership entity specified by the sensor purchase request (that is, a receiver of the currently purchased sensor is specified in the request), or issue the sales order to an ownership entity pre-associated with the first ownership entity (that is, a pre-associated ownership entity is used as a default receiver of the currently purchased sensor). A level at which the ownership entity (that receives the sales order) is located in the circulation network should not be lower than (that is, equal to or higher than) a level at which the first ownership entity is located in the circulation network, to implement a sales behaviour of purchasing a sensor from a lower-level ownership entity to a upper-level (or a peer) ownership entity. The sales order is used to instruct the ownership entity to sell corresponding (quantity and model) tire pressure sensors to the first ownership entity according to information recorded in the order, to meet a sensor purchase requirement of the entity. Circulation-related data such as logistics information and payment information may be involved, and details are not described again. Correspondingly, the management server may further maintain the sales data of the sensors sold by the ownership entity according to the sales order (this portion of data is generated in the above circulation process and concentrated to the management server), as a portion of the circulation-related data of the sensors (i.e., the sensors sold by the ownership entity).

Following the foregoing embodiment, if the sensor purchase request initiated by the agent 1 is received, the management server may determine the ownership entity specified by the request, for example, when the request includes the entity identifier of the manufacturer 1, the management server may determine the manufacturer 1 as the ownership entity specified by the request; or when the request includes the entity identifier of the agent 2, the management server may determine the agent 2 as the ownership entity specified by the request. In an embodiment, if the sensor purchase request does not include any entity identifier, an ownership entity pre-associated with the first ownership entity may be determined, for example, the management server may determine manufacturer 1 and/or agent 2 as ownership entities pre-associated with agent 1 according to a pre-association relationship maintained by the management server. Certainly, at least one ownership entity corresponding the first ownership entity may be determined according to the foregoing manner, and order information such as a sensor model, a quantity, and a price corresponding to each ownership entity may be further determined. Further, a sales order for each ownership entity may be generated based on the order information, and each sales order is issued to the corresponding ownership entity.

In an embodiment, if the management server does not integrate the circulation function, the management server may forward the sensor purchase request to the circulation server pre-associated with the management server (the circulation server integrates the circulation function of the sensors), so that the circulation server generates a sales order according to the sensor purchase request and issues the sales order to the ownership entity specified by the request or the ownership entity pre-associated with the first ownership entity. Similarly, a level of the ownership entity (that receives the sales order) in the circulation network is no lower than a level of the first ownership entity in the circulation network. The sales order is used to instruct the ownership entity to sell corresponding (quantity and model) tire pressure sensors to the first ownership entity according to information recorded in the order, to meet a sensor purchase requirement of the entity. Then, the management server may receive and maintain the sales data of the tire pressure sensors sold by the ownership entity according to the sales order (this portion of data is generated in the above circulation process and concentrated to the circulation server, then sent by the circulation server to the management server for maintenance), as a portion of the circulation-related data of the tire pressure sensors.

In the foregoing manner, the management server can acquire the circulation-related data of any tire pressure sensor generated in the complete circulation process from the completion of production to the start of installation.

In step 304, for any tire pressure sensor, activation-related data of the tire pressure sensor uploaded by an activation client is received, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle.

In an embodiment, the activation terminal, the electronic device (such as a mobile phone) where the activation client is located, the target vehicle and the tire pressure sensor can cooperate with each other to complete the activation event for the sensor, that is, the above parties cooperate with each other to activate the tire pressure sensor installed on the target tire of the target vehicle, so that the sensor can establish a normal wireless connection (i.e., the first wireless connection) with the target vehicle, and upload tire state data of the target tire detected by the sensor to the target vehicle based on the wireless connection. When any activation event is successfully completed, it may indicate that assembly or maintenance for the target vehicle is completed once. Taking maintenance as an example, during the above maintenance process (i.e., the activation event has not been completed) or after the maintenance is completed (i.e., the activation event has been completed), the client can upload the corresponding activation-related data to the management server, so that the management server caches the data and prepare for subsequent data maintenance.

As shown in FIG. 1, if a maintenance worker 1 specifies model information of a target vehicle in an activation client running on a mobile phone 14, and the activation client determines, from candidate communication parameters locally stored in the mobile phone 14, a target communication parameter to be written into a tire pressure sensor 22, the activation client may upload the parameter to the management server. Or if the activation client requests the management server to acquire the target communication parameter, the management server may return the parameter to the mobile phone 14 on the one hand, and may locally record the parameter on the other hand. If the maintenance worker 1 specifies the model information of the target vehicle and the position information of the target tire (to be maintained) in the target vehicle in the activation client, the activation client may immediately upload the model information and the position information to the management server, or upload the model information and the position information after the activation event is completed, which is not limited in the embodiments of the present disclosure.

In the foregoing manner, the management server can acquire the activation-related data generated for an activation event of the tire pressure sensor, that is, the activation-related data generated in a process of installing the sensor.

In step 306, for any tire pressure sensor, sensor-related data of the tire pressure sensor is maintained by using at least a sensor identifier of the tire pressure sensor as an index, where the sensor-related data includes the circulation-related data and the activation-related data.

After acquiring the circulation-related data and the activation-related data of the any management server, the circulation-related data and the activation-related data may be used as the sensor-related data of the sensor, and the sensor identifier of the sensor is used as an index to maintain the data, thereby establishing an association between the circulation-related data and the activation-related data.

It can be learned from the foregoing embodiment that, in this solution, for any tire pressure sensor, the management server acquires, on one hand, the circulation-related data of the tire pressure sensor generated in a circulation process, and receives, on the other hand, activation-related data of the sensor generated in an activation process and uploaded by an activation client, and further uses the circulation-related data and the activation-related data as sensor-related data of the sensor and maintains the sensor-related data by using the sensor identifier as an index. In this way, the management server can uniformly maintain all data of the tire pressure sensor involved in each process from the completion of production to the completion of activation (which has also been installed at this time and can work normally), which realizes the efficient management of the whole process of relevant data involved in the whole life cycle of the sensor (from the production to use), helps to track the whole life cycle of the sensor, and avoids potential safety hazards such as data loss and confusion to a certain extent through the unified refined management.

It should be noted that the sensor identifier of the tire pressure sensor in this disclosure is global information (or referred to as a global identifier) uniquely representing the sensor. For example, in a production stage of any tire pressure sensor, a sensor identifier of the sensor may be generated according to a preset rule or algorithm. The identifier is written into a local storage space of the sensor (that is, the identifier is written as default configuration information of the sensor). Based on this, in a subsequent learning stage of an activation event for the sensor, the mobile phone or the activation terminal may read the written sensor identifier from the sensor, and then send the identifier to the target vehicle, to complete processing in the learning stage. In an embodiment, a sensor identifier of the any tire pressure sensor may be generated for the sensor based on a preset rule or algorithm in a circulation process or activation process, and the sensor identifier is used as a portion of corresponding circulation-related data and/or activation-related data, to subsequently manage the foregoing data by using the identifier as an index. In an embodiment, the sensor identifier may also be generated in any other manner, which is not limited in this embodiment of this disclosure, but regardless of a manner of generation, global uniqueness of any sensor identifier should be ensured, that is, a case in which "different sensors have a same sensor identifier" should be avoided. Further, in addition to maintaining the sensor-related data of the tire pressure sensor by using the sensor identifier as an index, the maintenance may be performed by using other data as an index, such as a manufacturer name, an agent name, a store name, an individual user account, and circulation time information in the circulation-related data, or such as a sensor brand, a sensor model, a sensor price, and activation time information in the activation-related data. Maintaining the sensor-related data by using the plurality of types of data as indexes facilitates subsequent management of the sensor-related data, for example, data statistics may be performed based on maintenances corresponding to the plurality of indexes (for example, performing statistics on a quantity of activated sensors in a certain store within a period of time, or performing statistics on a quantity of sold sensors in a certain independent chain store within a period of time), to further improve efficiency and quality of managing the sensor-related data from a storage level, a query level, a statistics level, and the like.

In an embodiment, the management server may also perform statistical processing on the circulation-related data maintained by the management server and maintain a corresponding statistical result for user query. In an embodiment, the above statistical processing may be performed according to a pre-formulated statistical plan (i.e., pre-statistics, such as periodic statistics, or starting processing when the quality of maintained circulation-related data satisfies a threshold, etc.), so that the statistical results may be directly returned to the initiator when the data query request is received. In an embodiment, the foregoing statistical processing (that is, temporary statistical processing) may be performed in response to the received data query request, to reduce a workload of unnecessary statistical processing.

Specifically, for a target dimension corresponding to any data in the circulation-related data and/or the activation-related data, the management server may perform statistic (according to a preset statistical rule) on related indicators of each tire pressure sensor (which may include the any tire pressure sensor) in the target dimension, and use statistical results as sensor-related data of the respective tire pressure sensors for maintenance (certainly, only one piece of original data of the statistical results may be stored, and a mapping relationship between the statistical results and each tire pressure sensor is established). Taking the circulation network shown in FIG. 1 as an example, for the quantity of sold sensors (the target dimension) corresponding to the identity information (the circulation-related data) of the agent 1, the management server may perform statistic on the quantity of tire pressure sensors (i.e., related indicators) sold by the agent 1 in the last month (or the current month at the current moment), and use the statistical results as the sensor-related data of this portion of tire pressure sensors for maintenance. For another example, for the quantity of activated sensors (the target dimension) corresponding to the identity information (the activation-related data) of the user performing the activation operation in the store 2, the management server may perform statistic on and maintain the quantity of tire pressure sensors (i.e., related indicators) that have been activated by the maintenance worker 2 in the last week (or the current week at the current moment). The quantity may be used to represent the relevant workload (i.e., how many tire pressure sensors have been activated) of the maintenance worker 2 completing the activation event in the last week. In addition, the statistical results may be maintained as the sensor-related data of this portion of tire pressure sensors. Certainly, statistics may also be performed on other related indicators, and details are not described again.

In an embodiment, in response to a statistical request initiated for the target dimension corresponding to the circulation-related data and/or the activation-related data, the management server may perform the statistic on the related indicators of each tire pressure sensor in the target dimension based on a statistical range included in the statistical request, and return statistical results to an initiator of the statistical request. In this manner, the statistic may be temporarily performed on the related indicators in response to the statistical request initiated by the user, and details are not described again.

Further, because the management server maintains the sensor-related data (including the circulation-related data and the activation-related data, and may further include the foregoing statistical results) that each ownership entity has the management authority respectively, any ownership entity may query the foregoing data for the user to view. Correspondingly, the management server may receive a data query request including a data query condition initiated by a second ownership entity, query, from sensor-related data of which the second ownership entity has management authority, target data satisfying the data query condition, and return the target data to the second ownership entity. In this way, the second ownership entity may query the target data satisfying the data query condition from the sensor identifiers of which the second ownership entity has management authority, thereby satisfying the data query requirement of the second ownership entity.

Similar to the first ownership entity, the second ownership entity may also be any ownership entity registered at the management server. Therefore, the first ownership entity and the second ownership entity may be the same ownership entity or different ownership entities, which is not limited in this embodiment of this disclosure.

For the second ownership entity having a data query requirement, the second ownership entity may determine a corresponding data query condition according to the requirement, and initiate a data query request including the condition. The data query condition is used to specify to the management server which sensor-related data of which tire pressure sensors should be queried. For example, in the first data query request initiated by the manufacturer 1, the data query condition may include: the total number of tire pressure sensors with a model of xxx delivered (i.e. sold) in the last half of the year (i.e. 1-6 months). In this regard, the management server may return the total number to the second ownership entity after query. In the second data query request initiated by the agent 2, the data query condition may include: the total number of tire pressure sensors that have been activated among all tire pressure sensors purchased (buy) from the manufacturer 1 in May this year. In this regard, the management server may return the total number to the second ownership entity after the query. In the third data query request initiated by the store 2, the data query condition may include: the total number of tire pressure sensors with a model of yyy activated by maintenance worker 3 in the last month, and the sensor identifiers of all sensors. In this regard, the management server may return the total number and the sensor identifiers of all sensors to the second ownership entity after the query.

In addition, if the queried tire pressure sensor is circulated based on the foregoing circulation network including a plurality of levels, any ownership entity at a high level has the tire pressure sensor corresponding to sensor-related data with management authority, that is, the tire pressure sensor is circulated from the entity to at least one ownership entity at its next level. For example, after the manufacturer 1 sells some tire pressure sensors to the agent 1, the manufacturer 1 may query the sensor-related data of these tire pressure sensors. After the agent 1 sells some tire pressure sensors to the store 2, the agent 1 may query the sensor-related data of these tire pressure sensors. Certainly, the next-level ownership entity may consider the sensor-related data of which the next-level ownership entity has management authority as its own private data. And for some reasons, the next-level ownership entity is not willing to be learned by the previous-level ownership entity, and at this time, the next-level ownership entity may set query authority for the sensor-related data of which the next-level ownership entity has the management authority. For example, only the data is allowed to be queried by the next-level ownership entity (i.e., its own organization member), and its previous-level (or multi-level) ownership entity is refused. For example, the store 1 may set an authority for each tire pressure sensor activated by the maintenance worker 1. Only personnel of the store 1 are allowed to query, but queries of the agent 1 and the manufacturer 1 are not allowed. Certainly, the query authority may further be set from a plurality of dimensions such as a data type, a time range, a sensor model, and a sensor price, to implement refined management of the query authority and the disclosure range of the sensor-related data. A specific setting manner is not limited in this disclosure.

It should be noted that the data query request may actually be initiated by a member in the second ownership entity, for example, the circulation personnel of the manufacturer 1 may initiate the first data query request, the management personnel of the agent 2 may initiate the second data query request, and the maintenance worker 3 of the store 2 may initiate the third data query request, which will not be repeated. In addition, the management client may be run on the electronic device used by the related person, so that the related person can initiate the data query request by using the management client.

In an embodiment, the data query request may be initiated by any member in the second ownership entity (which may be a small group or a natural person in the entity). In this case, the management server may determine, according to a membership of the any member, candidate data of which the member has query authority, in the sensor-related data of which the second ownership entity has management authority, then determine the target data satisfying the data query condition from the candidate data. In this way, the second ownership entity can perform more fine-grained (accurate to small groups or even natural person in the entity) query authority control on the sensor-related data that the second ownership entity has the management authority, thereby further implementing refined control on the query authority and the data disclosure scope, and helping to improve data security.

An organizational architecture of the second ownership entity may include a plurality of levels, and for sensor-related data of which the second ownership entity has management authority, at least some members in the second ownership entity may have query authority for the sensor-related data, where for any member, a level of query authority possessed by the member is positively correlated with a level of the member in the plurality of levels. For example, the levels of the employees of the store 1 are sequentially: store leader, group leader, and maintenance worker from high to low. And at this time, for the circulation-related data of all tire pressure sensors designed for the store 1, the data query authority of the store leader is higher than the group leader, and the data query authority of the group leader is higher than the maintenance worker. For example, the store leader can query the statistical results of all the tire pressure sensors activated by all the maintenance workers in the store; the group leader can query the statistical results of all the tire pressure sensors activated by each maintenance worker in its group, and the personal statistical results of each maintenance worker and/or the detailed circulation-related data of the tire pressure sensors; and each maintenance worker can view the statistical results of all the tire pressure sensors activated by himself and the detailed circulation-related data of the tire pressure sensors therein. In this way, the hierarchical management of query authority of the circulation-related data can be realized.

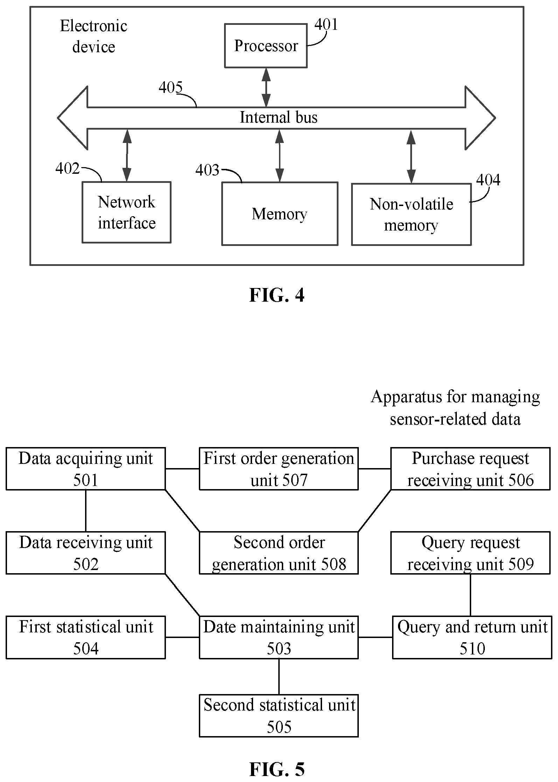

FIG. 4 is a schematic structural diagram of an electronic device according to this disclosure. Referring to FIG. 4, in terms of hardware, the server includes a processor 401, a network interface 402, a memory 403, a non-volatile memory 404, and an internal bus 405, and may further include hardware required by another service. One or more embodiments of this disclosure may be implemented based on software, for example, the processor 401 reads a corresponding computer program from the non-volatile memory 404 into the memory 403 and then runs the computer program. Of course, in addition to software implementations, one or more embodiments of the present disclosure do not exclude other implementations, such as logic devices or a combination of software and hardware, etc., that is, the execution entity of the following processing flow is not limited to each logic unit, and may also be hardware or logic devices.

FIG. 5 is a block diagram of an apparatus for managing sensor-related data according to this disclosure. Referring to FIG. 5, the apparatus may be applied to the electronic device shown in FIG. 4 to implement the technical solutions described in this disclosure. The apparatus is applied to a management server and includes:
a data acquiring unit 501, configured to, for any tire pressure sensor, acquire circulation-related data of the tire pressure sensor, where the circulation-related data is configured to record a circulation process of the tire pressure sensor among all ownership entities from completion of production to activation;
a data receiving unit 502, configured to receive activation-related data of the tire pressure sensor uploaded by an activation client, where the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
a date maintaining unit 503, configured to maintain sensor-related data of the tire pressure sensor by using at least a sensor identifier of the tire pressure sensor as an index, where the sensor-related data includes the circulation-related data and the activation-related data.

In an embodiment, the data acquiring unit 501 is specifically configured to:
acquire the circulation-related data of the tire pressure sensor from circulation-related data of all sensors maintained by the management server; or
acquire the circulation-related data of the tire pressure sensor from a circulation server pre-associated with the management server.

In an embodiment, the data acquiring unit 501 is specifically configured to:
receive the circulation-related data of the tire pressure sensor pushed by the circulation server; or
request the circulation-related data of the tire pressure sensor from the circulation server and receive the circulation-related data of the tire pressure sensor returned by the circulation server.

In an embodiment, the data acquiring unit 501 is specifically configured to:
acquire circulation-related data of a plurality of tire pressure sensors in batches, and query the circulation-related data of the tire pressure sensor from the acquired circulation-related data based on the sensor identifier; or
acquire the circulation-related data of the tire pressure sensor based on the sensor identifier of the tire pressure sensor.

In an embodiment, the apparatus further includes:
a first statistical unit 504, configured to: for a target dimension corresponding to the circulation-related data and/or the activation-related data, perform statistic on related indicators of each tire pressure sensor in the target dimension, and use statistical results as the sensor-related data of the respective tire pressure sensors for maintenance; or
a second statistical unit 505, configured to: in response to a statistical request initiated for the target dimension corresponding to the circulation-related data and/or the activation-related data, perform the statistic on the related indicators of each tire pressure sensor in the target dimension based on a statistical range included in the statistical request, and return statistical results to an initiator of the statistical request.

In an embodiment, all ownership entities registered at the management server may form a circulation network including a plurality of levels, an upper level of any two adjacent levels in the circulation network includes at least one upper-level entity, and a lower level of the any two adjacent levels includes at least one lower-level entity.

Where a tire pressure sensor belonging to any one of the at least one lower-level entity is sold to the lower-level entity by the at least one upper-level entity and/or at least one other lower-level entity, and any one of the ownership entities has management authority on the sensor-related data of a tire pressure sensor circulated to the ownership entity or from the ownership entity to other ownership entities.

In an embodiment, the apparatus further includes:
a purchase request receiving unit 506, configured to receive a sensor purchase request initiated by a first ownership entity;
a first order generation unit 507, configured to: generate a sales order according to the sensor purchase request and issue the sales order to an ownership entity specified by the sensor purchase request or an ownership entity pre-associated with the first ownership entity; and maintain sales data of the tire pressure sensor sold by the ownership entity based on the sales order as a portion of the circulation-related data of the tire pressure sensor; or
a second order generation unit 508, configured to: forward the sensor purchase request to a sales server pre-associated with the management server, to enable the sales server to generate the sales order based on the sensor purchase request and issue the sales order to the ownership entity specified by the sensor purchase request or the ownership entity pre-associated with the first ownership entity, and receive and maintain the sales data of the tire pressure sensor sold by the ownership entity based on the sales order as a portion of the circulation-related data of the tire pressure sensor;
where a level of the ownership entity in the circulation network is no lower than a level of the first ownership entity in the circulation network.

In an embodiment, the apparatus further includes:
a query request receiving unit 509, configured to receive a data query request including a data query condition initiated by a second ownership entity;
a query and return unit 510, configured to: query, from sensor-related data of which the second ownership entity has management authority, target data satisfying the data query condition, and return the target data to the second ownership entity.

In an embodiment, the data query request is initiated by any member in the second ownership entity, and the query and return unit 510 is specifically configured to:
determine, according to a membership of the member, candidate data of which the member has query authority, in the sensor-related data of which the second ownership entity has management authority; and
query the target data satisfying the data query condition from the candidate data.

In an embodiment, an organizational architecture of the second ownership entity includes a plurality of levels, and for the sensor-related data of which the second ownership entity has management authority, at least some members in the second ownership entity have query authority for the sensor-related data;
where for any member, a level of query authority possessed by the member is positively correlated with a level of the member in the plurality of levels.

In an embodiment, the activation event is completed by cooperation of an activation terminal, an electronic device in which the activation client is located, the target vehicle, and the any tire pressure sensor.

In an embodiment, all the ownership entities to which the tire pressure sensor belongs in sequence from the completion of production to the activation includes one of:
a manufacturer, an agent, and a maintenance store;
the manufacturer, an independent chain store and the maintenance store; and
the manufacturers, the independent chain store and an individual user.

In an embodiment, the circulation-related data includes at least one of: factory information of the tire pressure sensor, a sales order of the tire pressure sensor, logistics information of the tire pressure sensor, payment information of the tire pressure sensor, and identity information of the ownership entities;
the activation-related data includes at least one of: an activation time, a communication parameter written into the tire pressure sensor during activation, identity information of an activation operation user, feature information of the target vehicle, and vehicle owner information of the target vehicle.

In addition, the present disclosure further provides a computer-readable storage medium having a computer program stored thereon, where the program, when executed by a processor, implements the steps of the method according to any of the foregoing embodiments of the present disclosure.

Other embodiments of the present disclosure will be apparent to those skilled in the art from consideration of the specification and practice of the disclosure disclosed herein. This disclosure is intended to cover any variations, uses, or adaptations of this disclosure following the general principles thereof and including such departures from the present disclosure as come within known or customary practice in the art. It is intended that the specification and embodiments be considered as exemplary only, with a true scope and spirit of the disclosure being indicated by the following claims.

It should be understood that the present disclosure is not limited to the precise structures described above and shown in the drawings, and various modifications and changes may be made without departing from the scope thereof. The scope of the present disclosure is limited only by the appended claims.

It should be noted that, in the present disclosure, relational terms such as first and second are only used to distinguish one entity or operation from another entity or operation, and do not necessarily require or imply any such actual relationship or order between these entities or operations. The terms "comprises," "comprising," or any other variation thereof, are intended to cover a non-exclusive inclusion, such that a process, method, article, or device that includes a list of elements does not include only those elements but may include other elements not expressly listed or inherent to such process, method, article, or device. An element proceeded by "comprises a..." does not, without more constraints, preclude the existence of additional identical elements in the process, method, article, or device that comprises the element.

The method and device provided by the embodiments of the present disclosure are described in detail above, specific examples are used herein to illustrate the principle and implementation of the present disclosure, and the description of the above embodiments is only used to help understand the method and core idea of the present disclosure; meanwhile, for those skilled in the art, according to the idea of the present disclosure, there will be changes in the specific implementation and application scope, and in summary, the content of the present specification should not be understood as limiting the present disclosure.

## Claims

1. A method for managing sensor-related data, applied to a management server, the method comprising:
for any tire pressure sensor, acquiring circulation-related data of the tire pressure sensor, wherein the circulation-related data is configured to record a circulation process of the tire pressure sensor among all ownership entities from completion of production to activation;
receiving activation-related data of the tire pressure sensor uploaded by an activation client, wherein the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
maintaining sensor-related data of the tire pressure sensor by using at least a sensor identifier of the tire pressure sensor as an index, wherein the sensor-related data comprises the circulation-related data and the activation-related data.

2. The method according to claim 1, wherein the acquiring circulation-related data of the tire pressure sensor comprises:
acquiring the circulation-related data of the tire pressure sensor from circulation-related data of all sensors maintained by the management server; or
acquiring the circulation-related data of the tire pressure sensor from a circulation server pre-associated with the management server.

3. The method according to claim 2, wherein the acquiring the circulation-related data of the tire pressure sensor from a circulation server pre-associated with the management server comprises:
receiving the circulation-related data of the tire pressure sensor pushed by the circulation server; or
requesting the circulation-related data of the tire pressure sensor from the circulation server and receiving the circulation-related data of the tire pressure sensor returned by the circulation server.

4. The method according to claim 1, wherein the acquiring circulation-related data of the tire pressure sensor comprises:
acquiring circulation-related data of a plurality of tire pressure sensors in batches, and querying the circulation-related data of the tire pressure sensor from the acquired circulation-related data based on the sensor identifier; or
acquiring the circulation-related data of the tire pressure sensor based on the sensor identifier of the tire pressure sensor.

5. The method according to claim 1, further comprising:
for a target dimension corresponding to the circulation-related data and/or the activation-related data, performing statistic on related indicators of each tire pressure sensor in the target dimension, and using statistical results as the sensor-related data of the respective tire pressure sensors for maintenance; or
in response to a statistical request initiated for the target dimension corresponding to the circulation-related data and/or the activation-related data, performing the statistic on the related indicators of each tire pressure sensor in the target dimension based on a statistical range comprised in the statistical request, and returning statistical results to an initiator of the statistical request.

6. The method according to claim 1, wherein all ownership entities registered at the management server form a circulation network comprising a plurality of levels, an upper level of any two adjacent levels in the circulation network comprises at least one upper-level entity, and a lower level of the any two adjacent levels comprises at least one lower-level entity,
wherein a tire pressure sensor belonging to any one of the at least one lower-level entity is sold to the lower-level entity by the at least one upper-level entity and/or at least one other lower-level entity, and any one of the ownership entities has management authority on the sensor-related data of a tire pressure sensor circulated to the ownership entity or from the ownership entity to other ownership entities.

7. The method according to claim 6, further comprising:
receiving a sensor purchase request initiated by a first ownership entity;
generating a sales order according to the sensor purchase request and issuing the sales order to an ownership entity specified by the sensor purchase request or an ownership entity pre-associated with the first ownership entity; and maintaining sales data of the tire pressure sensor sold by the ownership entity based on the sales order as a portion of the circulation-related data of the tire pressure sensor; or
forwarding the sensor purchase request to a sales server pre-associated with the management server, to enable the sales server to generate the sales order based on the sensor purchase request and issue the sales order to the ownership entity specified by the sensor purchase request or the ownership entity pre-associated with the first ownership entity, and receiving and maintaining the sales data of the tire pressure sensor sold by the ownership entity based on the sales order as a portion of the circulation-related data of the tire pressure sensor;
wherein a level of the ownership entity in the circulation network is no lower than a level of the first ownership entity in the circulation network.

8. The method according to claim 6, further comprising:
receiving a data query request including a data query condition initiated by a second ownership entity;
querying, from sensor-related data of which the second ownership entity has management authority, target data satisfying the data query condition, and returning the target data to the second ownership entity.

9. The method according to claim 8, wherein the data query request is initiated by any member in the second ownership entity, and the querying, from sensor-related data of which the second ownership entity has management authority, target data satisfying the data query condition comprises:
determining, according to a membership of the member, candidate data of which the member has query authority, in the sensor-related data of which the second ownership entity has management authority; and
querying the target data satisfying the data query condition from the candidate data.

10. The method according to claim 9, wherein an organizational architecture of the second ownership entity comprises a plurality of levels, and for the sensor-related data of which the second ownership entity has management authority, at least some members in the second ownership entity have query authority for the sensor-related data, wherein
for any member, a level of query authority possessed by the member is positively correlated with a level of the member in the plurality of levels.

11. The method according to claim 1, wherein the activation event is completed by cooperation of an activation terminal, an electronic device in which the activation client is located, the target vehicle, and the tire pressure sensor.

12. The method according to any one of claims 1 to 11, wherein all the ownership entities to which the tire pressure sensor belongs in sequence from the completion of production to the activation comprise one of:
a manufacturer, an agent, and a maintenance store;
the manufacturer, an independent chain store and the maintenance store; and
the manufacturers, the independent chain store and an individual user.

13. The method according to any one of claims 1 to 11, wherein
the circulation-related data comprises at least one of: factory information of the tire pressure sensor, a sales order of the tire pressure sensor, logistics information of the tire pressure sensor, payment information of the tire pressure sensor, and identity information of the ownership entities;
the activation-related data comprises at least one of: an activation time, a communication parameter written into the tire pressure sensor during activation, identity information of an activation operation user, feature information of the target vehicle, and vehicle owner information of the target vehicle.

14. A system for managing sensor-related data, comprising: a management server, wherein the management server is configured to:
for any tire pressure sensor, acquire circulation-related data of the tire pressure sensor, wherein the circulation-related data is configured to record a circulation process of the tire pressure sensor among all ownership entities from completion of production to activation;
receive activation-related data of the tire pressure sensor uploaded by an activation client, wherein the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
maintain sensor-related data of the tire pressure sensor by using at least a sensor identifier of the tire pressure sensor as an index, wherein the sensor-related data comprises the circulation-related data and the activation-related data.

15. An apparatus for managing sensor-related data, applied to a management server and comprising:
a data acquiring unit, configured to, for any tire pressure sensor, acquire circulation-related data of the tire pressure sensor, wherein the circulation-related data is configured to record a circulation process of the tire pressure sensor among all ownership entities from completion of production to activation;
a data receiving unit, configured to receive activation-related data of the tire pressure sensor uploaded by an activation client, wherein the activation-related data is generated by an activation event of the tire pressure sensor, the activation event is configured to activate the tire pressure sensor installed on a target tire of a target vehicle, and after the activation, the tire pressure sensor is configured to submit collected tire state data of the target tire to the target vehicle; and
a date maintaining unit, configured to maintain sensor-related data of the tire pressure sensor by using at least a sensor identifier of the tire pressure sensor as an index, wherein the sensor-related data comprises the circulation-related data and the activation-related data.

16. An electronic device, comprising:
one or more processors;
a memory, configured to store instructions executable by the one or more processors;
wherein the one or more processors are configured to execute the instructions to implement the method for managing sensor-related data according to any one of claims 1 to 13.

17. A computer-readable storage medium, wherein when instructions in the computer-readable storage medium are executed by one or more processors of a management server, the management server is enabled to perform the method for managing sensor-related data according to any one of claims 1 to 13.
